(19) Europäisches Patentamt / European Patent Office / Office européen des brevets

(11) **EP 2 575 307 B1**

(12) **FASCICULE DE BREVET EUROPEEN**

(45) Date de publication et mention
de la délivrance du brevet:
**07.01.2015 Bulletin 2015/02**

(51) Int Cl.:
***H04L 29/06*** *(2006.01)*

(21) Numéro de dépôt: **12186625.5**

(22) Date de dépôt: **28.09.2012**

(54) **Technique de distribution d'un contenu dans un reseau de communication**

Technik zum Verteilen eines Inhalt in einem Kommunikationsnetzwerk

Technique of distribution of a content in a communication network

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.09.2011 FR 1158835**

(43) Date de publication de la demande:
**03.04.2013 Bulletin 2013/14**

(73) Titulaire: **Orange**
**75015 Paris (FR)**

(72) Inventeurs:
• **Bertrand, Gilles**
**92130 Issy-les-Moulineaux (FR)**
• **Ocnarescu, Cristian**
**91128 Palaiseau Cedex (FR)**
• **Gorges, Didier**
**92120 Montrouge (FR)**
• **Ruckenbusch, Laurent**
**92140 Clamart (FR)**

(56) Documents cités:
**WO-A1-2006/108434      US-A1- 2009 282 162**

## Description

L'invention se situe dans le domaine de la distribution de contenus numériques dans un réseau de communication, et plus particulièrement sous la forme d'un flux régulier et continu.

Une des techniques connues sous le nom de téléchargement progressif ou « progressive download » en anglais, consiste à télécharger progressivement le contenu vers l'entité cliente en permettant la lecture du contenu pendant ce téléchargement. L'entité cliente commence à restituer le contenu lorsqu'une file d'attente ou mémoire tampon contient quelques secondes de contenu. En arrière-plan, le téléchargement du contenu se poursuit afin d'alimenter sans cesse la file d'attente jusqu'à ce que l'ensemble du contenu soit téléchargé.

Toutefois, il peut arriver que la file d'attente se trouve en situation de famine, c'est-à-dire sans données à restituer, notamment lorsque les conditions de transport du contenu dans le réseau de communication se dégradent.

Une amélioration de cette technique, dite de diffusion de flux adapté en débit ou « Adaptive bitrate streaming » en anglais, consiste à segmenter le fichier de contenu en une suite de blocs élémentaires encodés sous la forme de segments de données et à adapter le débit de codage de ces segments de données à un niveau de qualité souhaité. Cette amélioration permet notamment d'adapter le niveau de qualité, et donc le débit de codage des données, en fonction des performances du réseau de communication afin de limiter les interruptions lors de la restitution du contenu. Le ressenti d'un utilisateur est ainsi amélioré. Une mise en oeuvre est décrite dans la demande de brevet publiée sous le numéro US2008/0195743. Comme décrit précédemment, le contenu est segmenté en une suite de blocs élémentaires. Dans cette technique, un même bloc élémentaire est encodé en plusieurs segments de données de niveaux de qualité différents. L'entité cliente souhaitant accéder à un contenu reçoit un fichier descriptif, comprenant pour un bloc élémentaire, une liste de liens ou adresses d'accès dans le réseau, chacun de ces liens permettant d'accéder à un segment de données associé au bloc élémentaire et encodé à un niveau de qualité donné. Pour obtenir un segment de données particulier, l'entité cliente supervise le débit réseau disponible pour la réception du ou de plusieurs segments de données. En fonction notamment de ce débit, et potentiellement d'autres paramètres tels que la taille de la fenêtre de visualisation, l'entité cliente choisit un niveau de qualité. Une fois le niveau de qualité sélectionné, l'entité cliente obtient le lien associé à partir du fichier descriptif et obtient ainsi à partir du lien le segment de données codé au niveau de qualité sélectionné. Toutefois, la mise en oeuvre de cette technique dans un réseau de communication opérationnel est contraignante. Il est en effet nécessaire que les entités clientes soient compatibles avec cette technique, soit dès leur installation, soit par mise à niveau. Lorsqu'une grande quantité d'entités clientes est déjà déployée dans le réseau de communication, il est particulièrement difficile et coûteux de les mettre à jour.

Un des buts de l'invention est de remédier à des insuffisances/inconvénients de l'état de la technique et/ou d'y apporter des améliorations.

Selon un premier aspect, l'invention a pour objet un procédé de distribution d'un contenu dans un réseau de communication, sous la forme d'un flux continu, ledit contenu étant segmenté en une suite de blocs élémentaires, le réseau de communication comprenant au moins une entité cliente, apte à recevoir des segments de données et à les mémoriser dans une file d'attente avant leur restitution en continu, ledit procédé comprenant les étapes suivantes mises en oeuvre par une entité de distribution :

a/ une étape de réception d'une requête d'accès au contenu en provenance de l'entité cliente ;
et pour distribuer un bloc élémentaire courant du contenu requis :
b/ une étape d'estimation d'une durée nécessaire à la restitution des données mémorisées dans la file d'attente de l'entité cliente ;
c/ une étape de sélection d'un segment de données parmi une pluralité de segments de données associés au bloc élémentaire courant respectivement encodés à des niveaux de qualité différents, la durée d'émission dudit segment de données étant inférieure à la durée estimée ;
d/ une étape d'envoi du segment de données sélectionné,

les étapes b/ à d/ étant réitérées jusqu'à ce que l'ensemble des segments de données respectivement associés aux blocs élémentaires constituant le contenu ait été envoyé à l'entité cliente.

Ainsi, grâce à l'invention, un équipement du réseau de communication sélectionne un segment de données dont le niveau de qualité permet de ne pas créer de famine au niveau de la file d'attente de l'entité cliente en estimant la durée nécessaire à la restitution des données mémorisées dans la file d'attente de l'entité cliente. Ceci permet de bénéficier des avantages de la technique de diffusion en flux adapté en débit, telle que décrite précédemment, tout en évitant des mises à jour fastidieuses et coûteuses des entités clientes. Le procédé de distribution selon l'invention est mis en oeuvre par l'entité de distribution, ce qui permet à la fois de limiter le nombre d'équipements à mettre à jour et également de simplifier ces mises à jour. Il est en effet plus simple pour un opérateur de réseau de mettre à jour quelques entités de distribution entièrement sous contrôle de l'opérateur.

Il est ici souligné que l'entité de distribution ne dispose pas du même niveau d'informations que l'entité cliente. La technique de diffusion en flux adapté en débit ne peut être transposée directement pour être mise en oeuvre par l'entité de distribution.

De plus, le procédé de distribution est compatible avec des entités clientes ne mettant pas en oeuvre la technique de diffusion en flux adapté en débit décrite précédemment.

L'entité de distribution dispose, pour un bloc élémentaire, de segments de données encodés à des niveaux de qualité différents et ne doit pas encoder le bloc élémentaire à la volée pour chaque entité cliente. Le procédé de distribution est ainsi très simple à mettre en oeuvre par un opérateur de réseau.

Le procédé selon l'invention n'entraîne par ailleurs aucune modification sur les dispositifs de segmentation et d'encodage des contenus. La segmentation et l'encodage des contenus sont réalisés une seule fois en plusieurs niveaux de qualité et pour l'ensemble des entités clientes.

Les modifications nécessaires au niveau de l'entité de distribution sont simples à mettre en oeuvre. L'entité de distribution doit en effet gérer un contexte associé à la requête de l'entité cliente. Toutefois, ce contexte étant très simple, le maintien de ce contexte et les étapes à mettre en oeuvre pour sélectionner un segment de données à partir du contexte ne nécessitent pas une charge processeur importante.

Selon une caractéristique particulière, la durée nécessaire à la restitution des données mémorisées dans la file d'attente estimée dépend d'une durée d'émission du segment de données associé au bloc élémentaire précédant le bloc élémentaire courant dans la suite.

Il n'est pas nécessaire que l'entité cliente envoie des informations explicites pour que l'entité de distribution puisse choisir le niveau de qualité des blocs élémentaires à envoyer. Ceci permet de bénéficier des avantages de la technique de diffusion en flux adapté en débit décrite précédemment sans aucune modification du côté de l'entité cliente. Aucune mise à jour de cette dernière n'est nécessaire dans le procédé de distribution selon l'invention.

Par ailleurs, seules des informations de haut niveau, telles que le début et la fin de l'émission d'un segment de données, sont nécessaires. L'obtention de ce type d'informations est aisée à mettre en oeuvre, indépendamment de l'architecture matérielle et du système d'exploitation. Aucune modification de la pile protocolaire n'est nécessaire.

Avantageusement, le segment de données étant décomposé en une pluralité de paquets à acheminer par un protocole de transport, la durée d'émission est déterminée par une durée écoulée entre l'instant d'émission du premier paquet et l'instant de réception d'un acquittement émis par l'entité cliente et relatif à la réception du dernier paquet.

L'utilisation de certaines informations fournies par le protocole de transport, par exemple l'instant de début d'envoi d'un segment de données et l'instant de réception de l'acquittement de ce segment de données émis par l'entité cliente, est simple à mettre en oeuvre. Il est en effet aisé d'obtenir ces informations d'un connecteur réseau (« socket » en anglais).

Un tel protocole de transport des paquets formant le segment de données est par exemple le protocole TCP, pour « Transmission Control Protocol ».

Le procédé de distribution selon l'invention est ainsi compatible avec des entités clientes qui mettent en oeuvre uniquement le protocole de transport TCP. Il n'est alors pas nécessaire de mettre en oeuvre des protocoles tels que RTP, pour « Real Time Protocol » et RTCP, pour « Real Time Control Protocol », pour remonter des informations de l'entité cliente vers l'entité de distribution.

Selon une autre caractéristique particulière, lors de l'étape de sélection, on sélectionne ledit segment de données lorsque la durée d'émission dudit segment de données est inférieure au produit de la durée nécessaire à la restitution des données mémorisées dans la file d'attente de l'entité cliente estimée et d'un coefficient prédéterminé inférieur à un.

Ce coefficient prédéterminé est inférieur à un, par exemple de l'ordre de 0.7. Ceci permet d'anticiper une éventuelle diminution de débit pour l'acheminement des segments de données dans le réseau de communication. Dans un tel cas, la probabilité que la file d'attente de l'entité cliente se trouve en situation de famine est diminuée.

Selon une autre caractéristique particulière, les segments de données associés au bloc élémentaire courant étant ordonnés par niveau de qualité décroissant, l'étape de sélection détermine la durée d'émission de chaque segment de données en fonction de cet ordre et s'arrête lorsque la durée d'émission dudit segment de données est inférieure à la durée nécessaire à la restitution des données mémorisées dans la file d'attente de l'entité cliente estimée.

On sélectionne ainsi le segment de données associé au meilleur niveau de qualité possible et tel que la durée d'émission de ce segment de données soit inférieure à la durée estimée nécessaire à la restitution des données mémorisées dans la file d'attente.

Avantageusement, la durée d'émission de ce segment de données est inférieure au produit de la durée estimée nécessaire à la restitution des données mémorisées dans la file d'attente et du coefficient prédéterminé.

Selon un deuxième aspect, l'invention concerne également une entité de distribution d'un contenu dans un réseau de communication, sous la forme d'un flux continu, ledit contenu étant segmenté en une suite de blocs élémentaires, à destination d'au moins une entité cliente du réseau de communication, apte à recevoir des segments de données et à les mémoriser dans une file d'attente avant leur restitution en continu, ladite entité de distribution comprenant :

- des moyens de réception d'une requête d'accès au contenu en provenance de l'entité cliente ;
- des moyens d'estimation d'une durée nécessaire à la restitution des données mémorisées dans la file d'attente de l'entité cliente ;

- des moyens de sélection d'un segment de données parmi une pluralité de segments de données associés à un bloc élémentaire respectivement encodés à des niveaux de qualité différents, agencés pour sélectionner un segment de données tel que la durée d'émission dudit segment de données est inférieure à la durée estimée ;
- des moyens d'envoi du segment de données sélectionné ;
- des moyens de commande agencés pour commander les moyens d'estimation et les moyens de sélection pour sélectionner un segment de données associé un bloc élémentaire, jusqu'à ce que l'ensemble des segments de données respectivement associés aux blocs élémentaires constituant le contenu ait été envoyé à l'entité cliente.

Selon un troisième aspect, l'invention concerne en outre un système de distribution, comprenant une entité de distribution telle que décrite précédemment et au moins une entité cliente comprenant des moyens de réception de segments de données, des moyens de mémorisation des segments de données dans une file d'attente et des moyens de restitution en continu des segments de données mémorisés.

Selon un quatrième aspect, l'invention concerne un programme pour une entité de distribution, comprenant des instructions de code de programme destinées à commander l'exécution des étapes du procédé précédemment décrit, lorsque ledit programme est exécuté par ladite entité de distribution et un support d'enregistrement lisible par une entité de distribution sur lequel est enregistré un programme pour une entité de distribution.

L'invention sera mieux comprise à l'aide de la description suivante d'un mode de réalisation particulier du procédé de l'invention, en référence aux dessins annexés sur lesquels :

- la figure 1 représente un système de distribution dans un réseau de communication ;
- la figure 2 représente les étapes du procédé de distribution selon un mode particulier de réalisation de l'invention ;
- la figure 3 illustre un exemple de mise en oeuvre du procédé de distribution selon un mode particulier de réalisation ;
- la figure 4 représente une entité de distribution selon un mode particulier de l'invention.

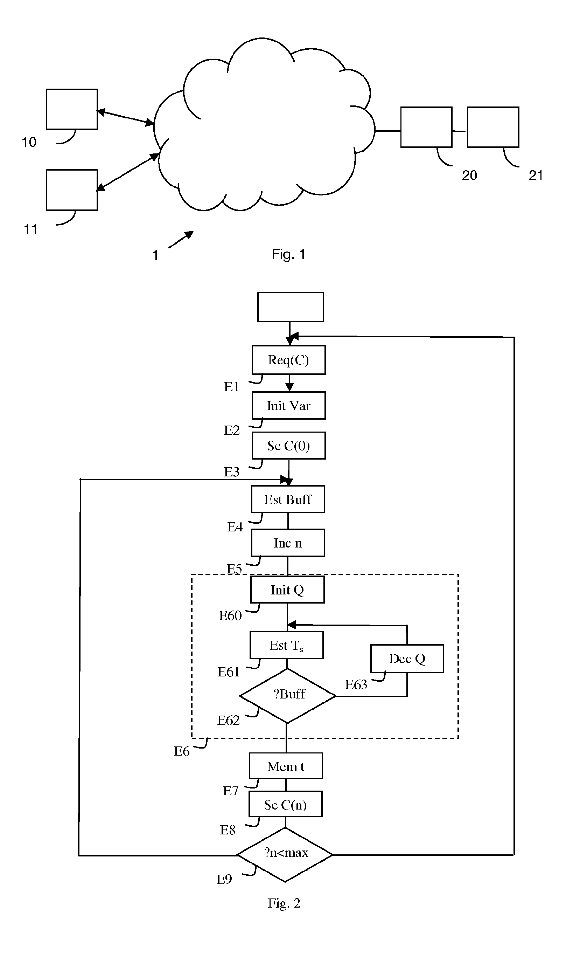

La figure 1 représente un système 1 de distribution de contenus permettant à des entités clientes 10, 11 d'accéder à différentes applications de distribution de contenus comme la télévision, la vidéo à la demande, l'Internet. Chaque entité cliente 10, 11 accède par l'intermédiaire d'un réseau de communication à des contenus proposés par des entités de distribution, dont une d'entre elles, l'entité de distribution 20, est représenté sur la figure 1. Une entité 21 d'encodage et de segmentation segmente sous la forme de segments de données les contenus dont elle dispose. Plus précisément, un contenu est segmenté en une suite de blocs élémentaires successifs. Un bloc élémentaire correspond au contenu pendant une durée, qui peut être variable. A titre d'exemple non limitatif, ces blocs élémentaires peuvent être d'une durée fixe, de l'ordre de quelques secondes. Un bloc élémentaire est ensuite encodé par l'entité 21 d'encodage et de segmentation en une pluralité de segments de données respectivement associés à des niveaux de qualité différents. Plus précisément, pour chaque débit d'un ensemble de débits, le bloc élémentaire est encodé à ce débit , auquel correspond un niveau de qualité de restitution donné. Aucune limitation n'est attachée au type de codage mis en oeuvre pour obtenir ces segments de données. Aucune modification n'est nécessaire au niveau de l'entité 21 d'encodage et de segmentation pour mettre en oeuvre le procédé de distribution selon l'invention.

Le contenu peut correspondre à un flux vidéo et/ou audio. Il peut également s'agir de contenu temps réel ou bien de contenus mémorisés. Aucune limitation n'est attachée au type de contenus. On se place par la suite dans le cas particulier d'une distribution d'un contenu temps réel.

Lorsqu'une entité cliente 10, 11 demande un contenu auprès de l'entité de distribution 20, des segments de données constituant le contenu sont transmis de l'entité de distribution 20 vers l'entité cliente 10, 11. L'entité cliente 10, 11 reçoit des segments de données et les mémorise dans une file d'attente avant leur restitution en continu. Lorsque la file d'attente comprend un nombre prédéterminé de segments de données, la restitution du contenu débute parallèlement à la réception des segments de données ultérieurs. Par la suite, on considère que la file d'attente de l'entité cliente est agencée pour mémoriser une pluralité de segments de données.

L'entité 20 de distribution est notamment agencée pour recevoir une requête d'accès à un contenu émise par une entité cliente 10, 11 et pour chaque entité cliente, gérer un contexte de distribution du contenu vers celle-ci. Plus précisément, l'entité 20 de distribution mémorise pour chaque entité cliente ayant requis un contenu, un numéro de bloc élémentaire courant, c'est-à-dire en cours d'émission, et un débit de transmission mesuré pour le bloc élémentaire précédant immédiatement le bloc élémentaire courant. Optionnellement, ce débit de transmission peut être lissé sur un nombre prédéterminé de blocs élémentaires précédant le bloc élémentaire courant. L'entité 20 de distribution sélectionne, pour chaque bloc élémentaire à transmettre et pour chaque entité cliente 10,11, un segment de données associé à un niveau de qualité adapté en fonction du contexte associé à l'entité cliente.

Nous allons maintenant décrire le procédé de distribution d'un contenu, tel qu'il est mis en oeuvre par l'entité de distribution 20, dans un mode particulier de réalisation en relation avec la figure 2.

On rappelle que l'entité de distribution 20 dispose au préalable pour un contenu donné, pour chaque bloc élémentaire de ce contenu, d'une pluralité de segments de données respectivement associés à des niveaux de qualité différents. Dans une variante, l'entité de distribution 20 dispose uniquement de liens ou d'adresses d'accès vers ces segments de données.

On note $T_{C(i)}$ la durée de restitution des segments de données associés au bloc élémentaire i.

Dans une étape E1, l'entité de distribution 20 reçoit une requête d'accès à un contenu C émise par l'entité cliente 10. Cette requête est par exemple un message HTTP GET Request conformément au protocole HTTP, pour « HyperText Transfert Protocol ». Si le contenu est disponible, ce message est acquitté par un message HTTP Reply (par exemple, 200 OK). Il est ici souligné que le protocole HTTP est donné à titre d'exemple non limitatif. Il est ainsi possible de mettre en oeuvre le procédé de distribution pour tout type de protocole applicatif s'appuyant sur un protocole de transport fiable tel que TCP.

Dans une étape E2, l'entité de distribution 20 initialise des variables de fonctionnement et un contexte associé à la requête de l'entité cliente. Plus précisément, l'entité de distribution 20 initialise une variable $T_1$ en fonction de la valeur courante d'une horloge, par exemple une horloge interne, et une durée $T_{play}$ nécessaire à la restitution des données mémorisées dans la file d'attente de l'entité cliente 20 à la valeur nulle. Un niveau de qualité par défaut est également sélectionné. Aucune limitation n'est attachée au choix de ce niveau de qualité par défaut. On choisit par exemple le niveau de qualité maximum. L'entité de distribution 20 mémorise dans le contexte associé à la requête de l'entité cliente la durée $T_{play}$.

Dans une étape E3, l'entité de distribution 20 envoie à l'entité cliente 10 le segment de données associé au niveau de qualité sélectionné correspondant au premier bloc élémentaire C(0).

Ce segment de données est décomposé en une pluralité de paquets à acheminer par un protocole de transport et est émis sous la forme de la pluralité de paquets en mode acquitté conformément au protocole de transport TCP. La variable $T_1$ mémorisé à l'étape E2 correspond à l'instant de début d'émission du premier paquet de la pluralité de paquets. Le segment de données est considéré comme émis lorsque l'acquittement émis par l'entité cliente 10 et relatif à la réception du dernier paquet de la pluralité de paquets est reçu. La variable $T_2$ correspond à l'instant de fin d'émission du dernier paquet de la pluralité de paquets et prend la valeur courante de l'horloge. Plus précisément, la variable $T_2$ correspond à l'instant de réception de l'acquittement émis par l'entité cliente. Ces informations $T_1$ et $T_2$ sont simples à obtenir d'un module d'émission et de réception, également appelé connecteur réseau (« socket » en anglais), en charge des émissions et réceptions dans le réseau de communication. Aucune modification n'est nécessaire au niveau de l'entité de distribution 20 pour obtenir ces informations.

Dans une étape E4, consécutive à la fin d'émission du segment de données courant, l'entité de distribution 20 estime la durée $T_{S(i)}$ d'émission de celui-ci, par différence, entre les valeurs respectives des variables $T_1$ et $T_2$. Ainsi, la durée d'émission du segment de données courant est déterminée par une durée écoulée entre les instants de début et de fin d'émission du segment de données. Plus précisément, pour le protocole de transport TCP, l'instant de début d'émission correspond à celui du début de l'envoi du premier paquet et l'instant de fin d'émission correspond à l'instant de réception d'un acquittement émis par l'entité cliente et relatif à la réception du dernier paquet.

Toujours dans cette étape E4, l'entité de distribution 20 estime le débit d'émission du segment de données courant, en effectuant le rapport entre le nombre de bits constituant le segment de données courant et la durée d'émission de celui-ci. L'entité de distribution 20 met également à jour la durée $T_{play}$ nécessaire à la restitution des données mémorisées dans la file d'attente de l'entité cliente et la mémorise dans le contexte associé à la requête de l'entité cliente. Plus précisément, la durée $T_{play}$ nécessaire à la restitution des données mémorisées dans la file d'attente dépend de la valeur précédente de cette durée $T_{play}$, de la durée d'émission $T_{S(i)}$ du segment de données courant et de la durée $T_{C(i)}$ associée au bloc élémentaire courant, selon la formule suivante :

$$T_{play} = \max(0, T_{play} + T_{c(i)} - T_{S(i)}).$$

L'entité de distribution 20 estime ainsi cette durée nécessaire à la restitution des données mémorisées dans la file d'attente de l'entité cliente à l'aide d'informations temporelles simples à obtenir et sans sollicitation de l'entité cliente.

Dans une étape E5, l'entité de distribution 20 incrémente le numéro de bloc élémentaire afin de passer au bloc élémentaire suivant, devenant ainsi le bloc élémentaire courant.

Dans une étape E6, l'entité de distribution 20 sélectionne un segment de données parmi une pluralité de segments de données associés au bloc élémentaire courant respectivement encodés à des niveaux de qualité différents, tel que la durée d'émission de ce segment de données est inférieure à la durée estimée déterminée à l'étape E4.

Dans le mode de réalisation décrit ici, dans une sous-étape E60 de l'étape E6, l'entité de distribution 20 initialise le niveau de qualité Q à la valeur maximale disponible pour ce bloc élémentaire courant. Les segments de données associés au bloc élémentaire courant sont ordonnés par niveau de qualité décroissant.

Dans une sous-étape E61 de l'étape E6, l'entité de distribution 20 estime la durée d'émission du segment de données encodé au niveau de qualité Q.

Dans une sous-étape E62 de l'étape E6, l'entité de distribution 20 détermine si la durée d'émission estimée est supérieure au produit de la durée $T_{play}$ et d'un coefficient prédéterminé inférieur ou égal à un. De préférence, le coefficient prédéterminé est de l'ordre de 0.7, ceci permettant de garantir que même en cas de détérioration du débit sur le réseau, l'entité cliente 10 ne risque pas de se trouver en situation de famine. Il est ici souligné que la durée nécessaire à la restitution des données mémorisées dans la file d'attente est sous-estimée. Elle est nécessairement supérieure à la valeur estimée, notamment du fait d'interruptions éventuelles de restitution à la demande de l'utilisateur de l'entité cliente.

Si à la sous-étape E62, on détermine que la durée d'émission estimée est supérieure au produit de la durée $T_{play}$ et du coefficient prédéterminé et si le niveau de qualité Q n'est pas à la valeur minimale possible, le procédé passe à une sous-étape E63 de l'étape E6 dégradant le niveau de qualité Q au niveau de qualité immédiatement inférieur. Le procédé repasse ensuite à la sous-étape E61 d'estimation de la durée d'émission du segment de données encodé au niveau de qualité Q. Ainsi, les segments de données sont évalués par ordre de niveau de qualité décroissant.

Si à la sous-étape E62, on détermine que la durée d'émission estimée est inférieure au produit de la durée $T_{play}$ et du coefficient prédéterminé ou bien que le niveau de qualité courant est le niveau de qualité minimum, dans une étape E7, l'entité de distribution 20 mémorise dans la variable $T_1$ la valeur courante de l'horloge, par exemple de son horloge interne.

Puis dans une étape E7, l'entité de distribution 20 envoie à destination de l'entité cliente 10 le segment de données associé au bloc élémentaire courant encodé au niveau de qualité sélectionné, décomposé en une pluralité de paquets à acheminer par le protocole de transport. L'entité de distribution 20 mémorise dans la variable $T_2$ la valeur courante de l'horloge, par exemple de son horloge interne, correspondant à la fin d'émission du segment de données.

Une fois ce segment de données émis, l'entité de distribution 20 vérifie dans une étape E9 si le bloc élémentaire distribué correspond au dernier bloc élémentaire composant le contenu C. Si tel n'est pas le cas, des blocs élémentaires restant à émettre, le procédé de distribution repasse à l'étape E4 d'estimation de la durée nécessaire à la restitution des données mémorisées dans la file d'attente de l'entité cliente 10. Les étapes E4 à E6 sont ainsi réitérées jusqu'à ce que l'ensemble des segments de données respectivement associés aux blocs élémentaires constituant le contenu ait été envoyé à l'entité cliente 10.

Si le bloc élémentaire distribué correspond au dernier bloc élémentaire composant le contenu C, le contenu étant entièrement transmis à l'entité cliente 10, le procédé de distribution repasse à l'étape E1 en attente de réception d'une nouvelle requête de distribution d'un contenu. Le procédé de distribution s'arrête lorsque le contenu a été entièrement distribué ou bien lorsque la connexion TCP est interrompue.

Aucune limitation n'est attachée à la manière de mettre en oeuvre l'étape E6. Dans un autre mode de réalisation, il est également possible de mémoriser dans le contexte associé à la requête de l'entité cliente le dernier niveau de qualité utilisé, c'est-à-dire celui utilisé pour le bloc élémentaire précédent, et de vérifier si la durée d'émission du segment de données associé à ce niveau de qualité pour le bloc élémentaire courant est inférieure à la durée $T_{play}$ estimée à l'étape E4. Si tel est le cas, il est alors possible de vérifier si cette condition est également vérifiée pour le segment de données associé au niveau de qualité immédiatement supérieur. Il est alors possible d'utiliser ce niveau de qualité immédiatement supérieur ou bien encore de rechercher un niveau de qualité encore meilleur. Si tel n'est pas le cas, c'est-à-dire si la durée d'émission du segment de données (pour le bloc élémentaire courant) associé au niveau de qualité utilisé pour le bloc élémentaire précédent est inférieure à la durée $T_{play}$, on recherche itérativement un niveau de qualité inférieur tel que le segment de données associé à ce niveau de qualité inférieur vérifie cette condition.

En variante, il est également possible d'autoriser un changement de niveau de qualité vers un niveau de qualité supérieur lorsque le niveau de qualité est resté stable pendant la transmission d'un nombre prédéterminé de blocs élémentaires. Dans ce cas, on mémorise dans le contexte associé à la requête de l'entité cliente en complément du niveau de qualité utilisé pour la transmission du bloc élémentaire précédent un compteur représentatif du nombre de blocs élémentaires transmis avec ce niveau de qualité. Ceci permet d'éviter des oscillations entre niveaux de qualité, qui sont susceptibles de gêner l'utilisateur de l'entité cliente lors de la restitution du contenu.

Dans un autre mode de réalisation, l'entité de distribution 20 peut également mémoriser dans le contexte associé à la requête de l'entité cliente les durées estimées obtenues à l'étape E4 pour un certain nombre de blocs élémentaires. Lorsque ces durées estimées restent dans un même ordre de grandeur, le volume des données mémorisées dans la file d'attente de l'entité cliente 10 reste constant : le niveau de qualité sélectionné convient aux conditions du réseau de communication. Lorsque l'analyse de ces durées estimées montre une forte décroissance de la durée estimée nécessaire pour restituer les données mémorisées dans la file d'attente de l'entité cliente, le niveau de qualité doit être diminué pour éviter une famine au niveau de l'entité cliente. Lorsque l'analyse de ces durées estimées montre une forte croissance de la durée estimée nécessaire pour restituer les données mémorisées dans la file d'attente de l'entité cliente, le niveau de qualité peut alors être augmenté sans risquer de famine de la file d'attente de l'entité cliente. Il est ici souligné, certaines entités clientes peuvent également demander une augmentation du niveau de qualité ou encore une limitation du débit d'envoi des données par l'entité de distribution (« bandwitdth throttling » en anglais) pour éviter une saturation de leurs files d'attente.

Dans un autre mode de réalisation, il est également possible de faire une moyenne pondérée des durées d'émission de plusieurs segments de données respectivement associés à des blocs élémentaires précédents, afin de lisser d'éventuelles variations temporaires du débit de la connexion.

Dans le procédé de distribution tel que décrit, un seul bloc élémentaire est transmis avant de mettre en oeuvre les étapes E4 à E8 itérativement. Ce mode de réalisation repose sur l'hypothèse que l'entité cliente va démarrer immédiatement la restitution du contenu dès que des données sont mémorisées dans la file d'attente. Il est bien entendu que le nombre de blocs élémentaires transmis préalablement à ces étapes est paramétrable. Ce paramétrage peut être effectué en fonction de données représentatives du réseau, telles que le temps d'aller et retour (RTT) lorsqu'il est connu. Ce paramétrage peut également être effectué en fonction des spécifications techniques des moyens de restitution prévues au niveau de l'entité cliente, telles que la durée minimum de contenu mémorisée ou plus généralement le volume de données mémorisées dans la file d'attente avant de débuter la restitution. Ces différents paramétrages du procédé de distribution permettent d'améliorer l'estimation de la durée estimée à l'étape E4.

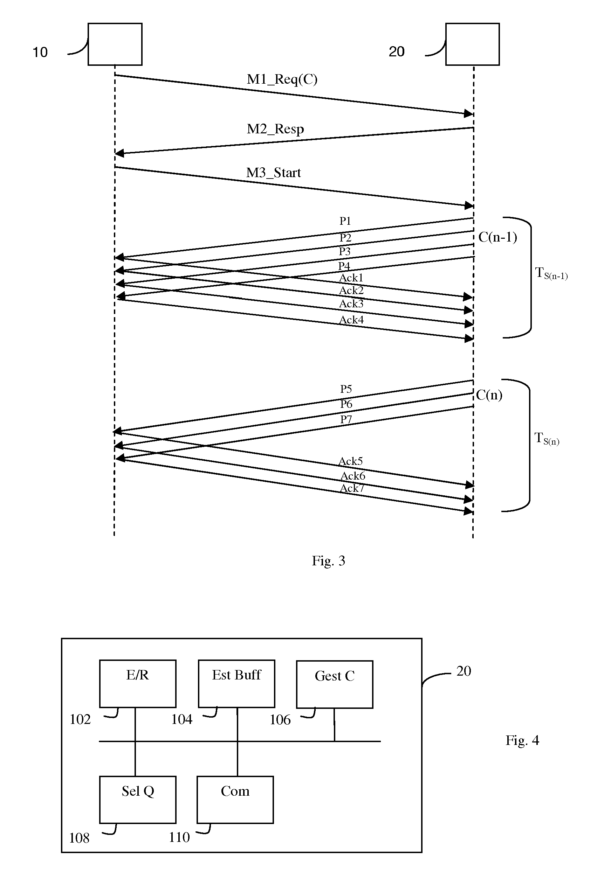

Un exemple illustratif de la mise en oeuvre du procédé est décrit en relation avec la figure 3. Il est ici souligné que les échanges entre les entités de distribution et cliente, notamment au niveau des paquets TCP, sont simplifiés afin de mieux illustrer le procédé de distribution. Aucune perte de paquets, ni d'arrivée des paquets dans un ordre différent, ne sont ici envisagés.

L'entité cliente 10 transmet le message M1 de requête d'accès au contenu à destination de l'entité de distribution 20. Cette dernière répond à l'entité cliente 10 avec un message M2 de réponse. L'entité cliente 10 transmet un message M3 demandant le début de la transmission.

Des segments de données, non représentés sur la figure 3, sont alors émis par l'entité de distribution 20 à destination de l'entité cliente 10.

On se place maintenant au niveau de la transmission d'un segment de données associé au bloc élémentaire C(n-1).

Le bloc élémentaire C(n-1) est transmis sous la forme du segment de données décomposé en quatre paquets TCP P1, P2, P3, P4. Chaque paquet P1, P2, P3, P4 est acquitté par l'entité cliente 10 par un paquet d'acquittement respectivement Ack1, Ack2, Ack3, Ack4. La durée nécessaire à l'émission de ce segment de données $T_{S(n-1)}$ est déterminée par la différence entre l'instant d'arrivée de l'acquittement Ack4 du quatrième paquet P4 et l'instant de début d'émission du premier paquet P1.

Dans cet exemple illustratif, les conditions de transmission dans le réseau de communication se dégradent. Pour émettre le bloc élémentaire suivant C(n), l'entité de distribution sélectionne un niveau de qualité inférieur par mise en oeuvre du procédé de distribution décrit précédemment. Le bloc élémentaire C(n) est transmis sous la forme d'un segment de données décomposé en trois paquets TCP P5, P6, P7. Chaque paquet P5, P6, P7 est acquitté par l'entité cliente 10 par un paquet d'acquittement respectivement Ack5, Ack6, Ack7. La durée nécessaire à l'émission de ce segment de données $T_{S(n)}$ est déterminée par la différence entre l'instant d'arrivée de l'acquittement Ack7 du troisième paquet P7 et l'instant d'émission du premier paquet P5. La diminution du niveau de qualité pour le bloc élémentaire C(n) a ainsi permis d'éviter une famine au niveau de l'entité cliente 10.

Nous allons maintenant décrire une entité de distribution 20 dans un mode particulier de réalisation de l'invention en référence à la figure 4.

Une telle entité de distribution 20 comprend :

- un module 102 d'émission/réception, agencé notamment pour recevoir une requête d'accès à un contenu en provenance d'une entité cliente et pour transmettre des segments de données à destination d'une entité cliente ;

- un module 104 d'estimation, agencé pour estimer, pour une entité cliente ayant requis un contenu, une durée nécessaire à la restitution des données mémorisées dans la file d'attente de l'entité cliente ;

- un module 106 de gestion des requêtes d'accès à des contenus, agencé notamment pour traiter une requête d'accès à un contenu émise par une entité cliente ;

- un module 108 de sélection, agencé pour sélectionner, pour une entité cliente ayant requis un contenu, un segment de données parmi une pluralité de segments de données associés à un bloc élémentaire respectivement encodés à des niveaux de qualité différents, tel que la durée d'émission dudit segment de données soit inférieure à la durée estimée ;

- un module 110 de commande, agencé pour commander le module 104 d'estimation et le module 108 de sélection pour sélectionner un segment de données associé un bloc élémentaire, jusqu'à ce que l'ensemble des segments de données respectivement associés aux blocs élémentaires constituant le contenu ait été envoyé à l'entité cliente ou bien que la session avec l'entité cliente soit interrompue.

Dans un premier mode de réalisation, l'entité de distribution 20 mémorise pour un contenu les segments de données associés à un bloc élémentaire respectivement encodés à des niveaux de qualité différents. Dans un deuxième mode de réalisation, l'entité de distribution 20 mémorise pour un contenu uniquement des liens ou des adresses d'accès vers ces segments de données.

Le module 106 est notamment agencé pour traiter des requêtes d'accès à un contenu émises par des entités clientes conforme au protocole HTTP. A partir de ces requêtes, le module 106 détermine sous quelle forme le contenu doit être présenté. Le module 106 obtient également des informations relatives au contenu, notamment pour chaque bloc élémentaire, quels niveaux de qualité sont disponibles, ainsi que les liens ou adresses d'accès respectives de ces segments de données. Le module 106 est également agencé pour mettre en forme les segments de données avant envoi à l'entité cliente sous la forme de trafic HTTP.

Le module 110 de commande est également agencé pour créer, mettre à jour et supprimer un contexte associé à une requête d'accès à un contenu émise par une entité cliente. Pour chaque bloc élémentaire, le module 110 de commande interagit avec les modules d'estimation 104 et de sélection 108 afin de commander ces modules pour un bloc élémentaire courant en fonction des informations mémorisées dans le contexte, tel que décrit précédemment, et de mettre ensuite à jour le contexte en fin de traitement du bloc élémentaire. Le module 110 de commande est en outre agencé pour obtenir du module 102 d'émission/réception un instant de début d'émission du segment de données et un instant de fin d'émission du segment de données.

Dans un mode de réalisation particulier, le segment de données étant décomposé en une pluralité de paquets à acheminer par un protocole de transport, le module 110 de commande est en outre agencé pour obtenir du module 102 d'émission/réception un instant d'émission du premier paquet et un instant de réception d'un acquittement relatif à la réception du dernier paquet émis par l'entité cliente.

Dans un mode de réalisation particulier, le module 108 de sélection est en outre agencé pour sélectionner le segment de données lorsque la durée d'émission de ce segment de données est supérieure au produit de la durée estimée et d'un coefficient prédéterminé inférieur ou égal à un.

Dans un autre mode de réalisation particulier, les segments de données associés au bloc élémentaire courant étant ordonnés par niveau de qualité décroissant, le module 108 de sélection est également agencé pour déterminer la durée d'émission de chaque segment de données en fonction de cet ordre tant que la durée d'émission d'un des segments de données est supérieure à la durée estimée.

Les modules 104, 106, 108 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par l'entité de distribution 20. L'invention concerne donc aussi :

- un programme pour une entité de distribution, comprenant des instructions de code de programme destinées à commander l'exécution des étapes du procédé précédemment décrit, lorsque ledit programme est exécuté par ladite entité ;
- un support d'enregistrement lisible par une entité de distribution sur lequel est enregistré le programme pour une entité de distribution.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 1 de distribution d'un contenu dans un réseau de communication. Le système 1 comprend au moins une entité de distribution 20 de contenus telle que décrite précédemment et une entité cliente 10, 11 comprenant des moyens d'émission d'une requête d'accès à un contenu, des moyens de réception de segments de données, des moyens de mémorisation des segments de données dans une file d'attente et des moyens de restitution en continu des segments de données mémorisés. Les moyens de restitution sont notamment agencés pour décoder les segments de données reçus avant de les restituer à l'utilisateur de l'entité cliente. Il est ici rappelé que l'entité de distribution 20 peut mémoriser les contenus en eux-mêmes encodés à différents niveaux de qualité ou bien obtenir les segments de données respectivement encodés à des niveaux de qualité différents à partir de liens ou d'adresses d'accès permettant d'y accéder.

## Revendications

1. Procédé de distribution d'un contenu dans un réseau de communication, sous la forme d'un flux continu, ledit contenu étant segmenté en une suite de blocs élémentaires, le réseau de communication comprenant au moins une entité cliente (10, 11), apte à recevoir des segments de données et à les mémoriser dans une file d'attente avant leur restitution en continu, ledit procédé comprenant les étapes suivantes mises en oeuvre par une entité de distribution (20) :

   a/ une étape (E1) de réception d'une requête d'accès au contenu en provenance de l'entité cliente ; et pour distribuer un bloc élémentaire courant du contenu requis :
   b/ une étape (E4) d'estimation d'une durée nécessaire à la restitution des données mémorisées dans la file d'attente de l'entité cliente ;
   c/ une étape (E6) de sélection d'un segment de données parmi une pluralité de segments de données associés au bloc élémentaire courant respectivement encodés à des niveaux de qualité différents, lorsque la durée d'émission dudit segment de données est inférieure au produit de la durée nécessaire à la restitution des données mémorisées dans la file d'attente de l'entité cliente estimée et d'un coefficient prédéterminé inférieur à un ;

d/ une étape (E8) d'envoi du segment de données sélectionné,

les étapes b/ à d/ étant réitérées jusqu'à ce que l'ensemble des segments de données respectivement associés aux blocs élémentaires constituant le contenu ait été envoyé à l'entité cliente.

2. Procédé selon la revendication 1, dans lequel la durée nécessaire à la restitution des données mémorisées dans la file d'attente estimée dépend d'une durée d'émission du segment de données associé au bloc élémentaire précédant le bloc élémentaire courant dans la suite.

3. Procédé selon la revendication 2, dans lequel, le segment de données étant décomposé en une pluralité de paquets à acheminer par un protocole de transport, la durée d'émission est déterminée par une durée écoulée entre l'instant d'émission du premier paquet et l'instant de réception d'un acquittement émis par l'entité cliente et relatif à la réception du dernier paquet.

4. Procédé selon la revendication 1, dans lequel, les segments de données associés au bloc élémentaire courant étant ordonnés par niveau de qualité décroissant, l'étape de sélection détermine la durée d'émission de chaque segment de données en fonction de cet ordre et s'arrête lorsque la durée d'émission dudit segment de données est inférieure à la durée nécessaire à la restitution des données mémorisées dans la file d'attente de l'entité cliente estimée.

5. Entité de distribution (20) d'un contenu dans un réseau de communication, sous la forme d'un flux continu, ledit contenu étant segmenté en une suite de blocs élémentaires, à destination d'au moins une entité cliente (10, 11) du réseau de communication, apte à recevoir des segments de données et à les mémoriser dans une file d'attente avant leur restitution en continu, ladite entité de distribution comprenant :

  - des moyens (102) de réception d'une requête d'accès au contenu en provenance de l'entité cliente ;
  - des moyens (104) d'estimation d'une durée nécessaire à la restitution des données mémorisées dans la file d'attente de l'entité cliente ;
  - des moyens (108) de sélection d'un segment de données parmi une pluralité de segments de données associés à un bloc élémentaire respectivement encodés à des niveaux de qualité différents, agencés pour sélectionner un segment de données tel que la durée d'émission dudit segment de données est inférieure au produit de la durée nécessaire à la restitution des données mémorisées dans la file d'attente de l'entité cliente estimée et d'un coefficient prédéterminé inférieur à un ;

  - des moyens (102) d'envoi du segment de données sélectionné ;
  - des moyens (110) de commande agencés pour commander les moyens d'estimation et les moyens de sélection pour sélectionner un segment de données associé un bloc élémentaire, jusqu'à ce que l'ensemble des segments de données respectivement associés aux blocs élémentaires constituant le contenu ait été envoyé à l'entité cliente.

6. Système (1) de distribution d'un contenu dans un réseau de communication, ledit système comprenant au moins une entité de distribution dudit contenu selon la revendication 5 et une entité cliente comprenant des moyens de réception de segments de données, des moyens de mémorisation des segments de données dans une file d'attente et des moyens de restitution en continu des segments de données mémorisés.

7. Programme pour une entité de distribution d'un contenu, comprenant des instructions de code de programme destinées à commander l'exécution des étapes du procédé selon l'une des revendications 1 à 4, lorsque ledit programme est exécuté par ladite entité de distribution.

8. Support d'enregistrement lisible par une entité de distribution sur lequel est enregistré le programme selon la revendication 7.

**Patentansprüche**

1. Verfahren zum Verteilen eines Inhalts in einem Kommunikationsnetzwerk in Form eines kontinuierlichen Flusses, wobei der Inhalt in eine Abfolge von elementaren Blöcken segmentiert ist, wobei das Kommunikationsnetzwerk mindestens eine Client-Entität (10, 11) umfasst, die in der Lage ist, Datensegmente zu empfangen und sie vor ihrer kontinuierlichen Wiedergabe in einer Warteschlange zu speichern, wobei das Verfahren die folgenden Schritte umfasst, die von einer Verteilerentität (20) durchgeführt werden:

  a) einen Schritt (E1) zum Empfangen einer Zugriffsanfrage auf den von der Client-Entität kommenden Inhalt; und zum Verteilen eines aktuellen elementaren Blocks des angeforderten Inhalts;

b) einen Schritt (E4) zum Schätzen einer Dauer, die für die Wiedergabe der in der Warteschlange der Client-Entität gespeicherten Daten erforderlich ist;

c) einen Schritt (E6) zum Auswählen eines Datensegments aus einer Vielzahl von Datensegmenten, die mit dem aktuellen elementaren Block assoziiert sind, die jeweils mit unterschiedlichen Qualitätsniveaus kodiert sind, wenn die Ausgabedauer des Datensegments kleiner ist als das Produkt aus der für die Wiedergabe der in der Warteschlange der Client-Entität gespeicherten Daten erforderlichen geschätzten Dauer und einem vorbestimmten Koeffizienten kleiner als eins;

d) einen Schritt (E8) zum Senden des ausgewählten Datensegments,

wobei die Schritte b) bis d) wiederholt werden, bis alle Datensegmente, die jeweils mit den elementaren Blöcken assoziiert sind, die den Inhalt darstellen, an die Client-Entität gesendet wurden.

2. Verfahren nach Anspruch 1, wobei die geschätzte Dauer, die für die Wiedergabe der in der Warteschlange gespeicherten Daten erforderlich ist, von einer Ausgabedauer des Datensegments abhängt, das mit dem elementaren Block assoziiert ist, der dem aktuellen elementaren Block in der Abfolge vorausgeht.

3. Verfahren nach Anspruch 2, wobei, wenn das Datensegment in eine Vielzahl von Paketen zerlegt ist, die von einem Transportprotokoll weiterzuleiten sind, die Ausgabedauer durch eine Dauer bestimmt wird, die zwischen dem Zeitpunkt der Ausgabe des ersten Pakets und dem Zeitpunkt des Empfangs einer Bestätigung vergangen ist, die von der Client-Entität ausgegeben wird und die sich auf den Empfang des letzten Pakets bezieht.

4. Verfahren nach Anspruch 1, wobei, wenn die Datensegmente, die mit dem aktuellen elementaren Block assoziiert sind, nach abnehmendem Qualitätsniveau geordnet sind, der Auswahlschritt die Dauer der Ausgabe jedes Datensegments in Abhängigkeit von dieser Reihenfolge bestimmt, und stoppt, wenn die Dauer der Ausgabe des Datensegments kleiner ist als die geschätzte Dauer, die für die Wiedergabe der Daten erforderlich ist, die in der Warteschlange der Client-Entität gespeichert sind.

5. Entität (20) zum Verteilen eines Inhalts in einem Kommunikationsnetzwerk in Form eines kontinuierlichen Flusses, wobei der Inhalt in eine Abfolge von elementaren Blöcken segmentiert ist, an mindestens eine Client-Entität (10, 11) des Kommunikationsnetzwerks, die in der Lage ist, Datensegmente zu empfangen und sie vor ihrer kontinuierlichen Wiedergabe in einer Warteschlange zu speichern, wobei die Entität zum Verteilen Folgendes umfasst:

- Mittel (102) zum Empfangen einer Zugriffsanfrage auf den Inhalt, die von der Client-Entität kommt;
- Mittel (104) zum Schätzen einer Dauer, die für die Wiedergabe der in der Warteschlange der Client-Entität gespeicherten Daten erforderlich ist;
- Mittel (108) zum Auswählen eines Datensegments aus einer Vielzahl von Datensegmenten, die mit einem elementaren Block assoziiert sind, die jeweils mit unterschiedlichen Qualitätsniveaus kodiert sind, die ausgebildet sind, um ein Datensegment derart auszuwählen, dass die Ausgabedauer des Datensegments kleiner ist als das Produkt aus der für die Wiedergabe der in der Warteschlange der Client-Entität gespeicherten Daten erforderlichen geschätzten Dauer und einem vorbestimmten Koeffizienten kleiner als eins;
- Mittel (102) zum Senden des ausgewählten Datensegments;
- Mittel (110) zum Steuern, die ausgebildet sind, um die Mittel zum Schätzen und die Mittel zum Auswählen, um ein Datensegment auszuwählen, das mit einem elementaren Block assoziiert ist, zu steuern, bis die Gesamtheit der Datensegmente, die jeweils mit den elementaren Blöcken, die den Inhalt darstellen, assoziiert sind, an die Client-Entität gesendet wurde.

6. System (1) zum Verteilen eines Inhalts in einem Kommunikationsnetzwerk, wobei das System mindestens eine Entität zum Verteilen des Inhalts nach Anspruch 5 und eine Client-Entität umfasst, die Mittel zum Empfangen von Datensegmenten, Mittel zum Speichern der Datensegmente in einer Warteschlange und Mittel zur kontinuierlichen Wiedergabe der gespeicherten Datensegmente umfasst.

7. Programm für eine Entität zum Verteilen eines Inhalts, das Programmcodeanweisungen umfasst, die dazu bestimmt sind, die Ausführung der Schritte des Verfahrens nach einem der Ansprüche 1 bis 4 zu steuern, wenn das Programm von der Verteilerentität ausgeführt wird.

8. Aufzeichnungsmedium, das von einer Verteilerentität gelesen werden kann, auf dem das Programm nach Anspruch 7 aufgezeichnet ist.

## Claims

1. Method of distribution of a content in a communication network, in the form of a continuous stream, said content being segmented into a series of elementary blocks, the communication network comprising at least one client entity (10, 11), suitable for receiving data segments and storing them in memory in a queue before their continuous retrieval, said method comprising the following steps implemented by a distribution entity (20):

   a/ a step (E1) of receiving a request to access the content originating from the client entity;
   and for distributing a current elementary block of the requisite content:
   b/ a step (E4) of estimating a period of time required for the retrieval of the data stored in memory in the queue of the client entity;
   c/ a step (E6) of selecting one data segment among a plurality of data segments associated with the current elementary block respectively encoded at different levels of quality, when the duration of transmission of said data segment is less than the product of the estimated period of time required for the retrieval of the data stored in memory in a queue of the client entity and a predetermined coefficient of less than 1;
   d/ a step (E8) of sending the selected data segment, the steps b/ to d/ being repeated until all the data segments respectively associated with the elementary blocks forming the content have been sent to the client entity.

2. Method according to Claim 1, in which the estimated period of time required for the retrieval of the data stored in memory in the queue depends on a duration of transmission of the data segment associated with the elementary block preceding the current elementary block in the series.

3. Method according to Claim 2, in which, the data segment being broken down into a plurality of packets to be routed by way of a transport protocol, the duration of transmission is determined by a period of time elapsed between the instant of transmission of the first packet and the instant of receipt of an acknowledgment transmitted by the client entity and relating to the receipt of the last packet.

4. Method according to Claim 1, in which, the data segments associated with the current elementary block being ordered in descending order of quality, the selecting step determines the duration of transmission of each data segment as a function of this order and stops when the duration of transmission of said data segment is less than the estimated period of time required for the retrieval of the data stored in memory in the queue of the client entity.

5. Entity (20) for distribution of a content in a communication network, in the form of a continuous stream, said content being segmented into a series of elementary blocks, towards at least one client entity (10, 11) of the communication network, suitable for receiving data segments and storing them in memory in a queue before their continuous retrieval, said distribution entity comprising:

   - means (102) for receiving a request to access the content originating from the client entity;
   - means (104) for estimating a period of time required for the retrieval of the data stored in memory in the queue of the client entity;
   - means (108) for selecting one data segment among a plurality of data segments associated with an elementary block, respectively encoded at different levels of quality, arranged to select a data segment such that the duration of transmission of said data segment is less than the product of the estimated period of time required for the retrieval of the data stored in memory in the queue of the client entity and a predetermined coefficient of less than 1;
   - means (102) for sending the selected data segment;
   - commanding means (110) arranged to command the estimating means and the selecting means for selecting a data segment associated with an elementary block, until all the data segments respectively associated with the elementary blocks forming the content have been sent to the client entity.

6. System (1) for distribution of a content in a communication network, said system comprising at least one entity for distribution of said content according to Claim 5 and a client entity comprising means for receiving data segments, means for storing data segments in memory in a queue and means for continuously retrieving the data segments stored in memory.

7. Program for an entity for distribution of a content, comprising program code instructions intended to command the execution of the steps of the method according to one of Claims 1 to 4, when said program is executed by said distribution entity.

8. Storage medium readable by a distribution entity on which the program according to Claim 7 is stored.

Fig. 1

Req(C)

E1

Init Var

E2

Se C(0)

E3

Est Buff

E4

Inc n

E5

Init Q

E60

Est T$_s$

Dec Q

E61

?Buff

E63

E62

E6

Mem t

E7

Se C(n)

E8

?n<max

E9

Fig. 2

Fig. 3

Fig. 4

**RÉFÉRENCES CITÉES DANS LA DESCRIPTION**

**Documents brevets cités dans la description**

- US 20080195743 A